Europäisches Patentamt

European Patent Office

Office européen des brevets

(11) Veröffentlichungsnummer: **0 468 300 A1**

(12) **EUROPÄISCHE PATENTANMELDUNG**

(21) Anmeldenummer: **91111591.3**

(22) Anmeldetag: **12.07.91**

(51) Int. Cl.5: **H02B 13/035**, H02B 13/055

(30) Priorität: **27.07.90 DE 4023847**

(43) Veröffentlichungstag der Anmeldung:
**29.01.92 Patentblatt 92/05**

(84) Benannte Vertragsstaaten:
**DE FR GB IT**

(71) Anmelder: **Sachsenwerk Aktiengesellschaft**
**Rathenaustrasse 2**
**W-8400 Regensburg(DE)**

(72) Erfinder: **Stegmüller, Karl, Dipl.-Ing.**
**Galgenberg West 11**
**W-8401 Wiesent(DE)**

(74) Vertreter: **Breiter, Achim, Dipl.-Ing.**
**AEG Aktiengesellschaft, Theodor-Stern-Kai 1**
**W-6000 Frankfurt am Main 70(DE)**

(54) **Prüfeinrichtung für das Isoliervermögen von metallgekapselten, mit einem Isoliergas gefüllten Schaltanlagen.**

(57) Die Prüfeinrichtung stellt eine Kombination zur Prüfung des Isoliervermögens dreiphasiger Schaltanlagen und zur Prüfung der elektrischen Festigkeit des Isoliergases bei in Betrieb befindlichen Schaltanlagen dar.

Eine fest in die Kappselung (9) einer gasisolierten Schaltanlage eingebaute Durchführung (2) wird von einem längs und in Rotationsrichtung beweglichen Prüfleiter (1) durchdrungen, an dessen Innenseite eine schwenkbare Prüfelektrode 4 mit einem vorzugsweise kugelförmigen Kontaktstück (6) angeordnet ist. Durch Drehung am Prüfleiter (1) wird das Kontaktstück abwechselnd mit dem Leiterstücken (5) einer dreiphasigen Schaltanlage in Verbindung gebracht. In einer weiteren Prüfstellung steht das Kontaktstück (6) einer geerdeten Elektrode (7) in einem Abstand (A) gegenüber, indem mit einer geeigneten Prüfspannung die Durchschlagsfestigkeit des Isoliegases geprüft werden kann. In einer fünften Stellung berührt das Kontaktstück (6) das Erdpotential und verhindert so, daß nach einer durchgeführten Prüfung eine Ladung auf der Prüfelektrode bleibt und eine gefährliche Berührungsspannung an der Außenseite der Schaltanlage erzeugt. Die Erfindung beinhaltet des weiteren Sicherheitsmaßnahmen, die in einfacher Weise sicherstellen, daß im normalen Betriebsszustand der Schaltanlage die Prüfelektrode (4) immer an Erdpotential liegt.

Figur 2

Die Erfindung bezieht sich auf eine Prüfeinrichtung für das Isoliervermögen von metallgekapselten, mit einem Isoliergas gefüllten Schaltanlagen nach dem Oberbegriff des ersten Patentanspruchs. Bisher sind verschiedene Prüfeinrichtungen bekannt geworden, mit denen sowohl in einpolig gekapselten, als auch in dreipolig gekapselten Schaltanlagen die Prüfspannung mittels spezieller Durchführungen an einzelne Leiter oder an alle drei Phasen gleichzeitig angelegt werden kann. Sie dienen zur Überprüfung des Isoliervermögens der Schaltanlage vor der Inbetriebnahme derselben oder nach einer Revision bzw. auch zur Durchführung von Kabelprüfungen. Eine solche Vorrichtung, mit der die Spannung wahlweise an eine Phase angelegt werden kann, während gleichzeitig die beiden anderen Phasen einer dreipoligen Schaltanlage mit Erdpotential verbunden sind, ist aus der DE-OS 26 28 453 bekannt. Zur Anbringung der genannten Prüfeinrichtung ist in dem entsprechenden Raum der Schaltanlage das Isoliergas abzulassen und die Prüfeinrichtung anzuflanschen. Die Prüfeinrichtung selbst weist zur Einleitung der Prüfspannung eine Hochspannungs-Durchführung auf und zur Umschaltung der Prüfelektrode auf die einzelnen Leiter der Phasen eine geerdete Umschalteinrichtung.

In dem Aufsatz "Ausführung und Bauvarianten der metallgeschotteten ZV2-Schaltanlage"; Kurt Schepers, Erich Sonnenschein; Calor-Emag-Mitteilungen Heft I/1984, ist in Bild 8 ein Kabelprüfstecker gezeigt, mit dem die Verbindungsleitung jeweils einer Phase für eine Kabelprüfung kontaktiert werden kann. Bei der Anbringung der Prüfdurchführung verbleibt das Isoliergas innerhalb der Schaltanlage.

Die Möglichkeit Kabelprüfungen an einzelnen Phasen einer dreipoligen Schaltanlage durchzuführen, ist auch beispielsweise mit der in EP 0 068 951 B1 beschriebenen Schaltanlage in der Erdungsstellung des Dreistellungsschalters nach Lösung der externen Erdverbindungsleitung in der zu prüfenden Phase vorgesehen. Auch bei dieser Schaltanlage verbleibt das Isoliergas während der Prüfung im Inneren der Kapselung.

In einpolig gekapselten Schaltanlagen ist es bisher üblich, gemäß EP 0 252 416 A2 die Prüfspannung über eine Durchführung an die Leitungsführung innerhalb der Kapselung heranzubringen. Auch hier wird bei der ursprünglichen Isoliergasfüllung geprüft.

Eine Prüfeinrichtung für eine dreiphasig gekapselte gasisolierte Schaltanlage nach dem Oberbegriff des ersten Patentanspruchs ist in der Druckschrift EP 168 320 A2 beschrieben. Die bekannte Prüfeinrichtung besteht aus einem Prüfleiter, der die Kapselung in einer Isolierplatte durchdringt, in der er mittels einer gasdichten Buchse längs verschiebbar und drehbar gelagert ist. Zur Durchführung einer Spannungsprüfung wird eine zusätzliche Prüfdurchführung an der Außenseite der Kapselung aufgesetzt. Im Inneren der Schaltanlage weist der Prüfleiter eine Kröpfung auf, an deren Ende drei Kontaktarme mit gefederten Kontakten vorgesehen sind. Die Kontakte sind in einer ersten Prüfstellung mit je einer Phase der sammelschienenseitigen Anschlüsse und in der zweiten Prüfstellung mit je einer Phase der abgangsseitigen Anschlüsse des Trenn- oder -Lastschalters verbunden. An der Außenseite der Schaltanlage wird die Prüfelektrode dabei durch einen Adapter fixiert, an den eine Prüfspannungsquelle über eine dabei anzubauende Prüfdurchführung angeschlossen werden kann. Bei normalem Betrieb der Schaltanlage ist die Prüfelektrode durch einen zweiten Adapter in einer Stellung festgehalten, in der die Kontakte einen dem Isoliervermögen entsprechenden Abstand zu den Anschlüssen des Trenn- oder Lastschalters aufweisen.

Mit der bekannten Prüfeinrichtung lassen sich ausschließlich dreiphasige Prüfungen des Isoliervermögens durchführen, bei denen alle drei Phasen gleichzeitig an die Prüfspannung gelegt werden. Dabei kann entweder eine Kabelprüfung bei abgetrenntem Anschluß oder eine Prüfung für die aktiven Teile der Schaltanlage bei abgetrenntem Kabel durchgeführt werden. Bei allen Prüfungen muß auf den Adapter eine besondere Prüfdurchführung, deren Innenraum vor dem Anlegen der Spannung mit Isoliergas zu füllen ist, aufgebaut werden, an die eine Prüfspannungsquelle anzuschließen ist. Durch besondere Adapter werden mittels einer Rasteinrichtung die beiden Prüfstellungen so markiert, daß die Lage der Prüfelektroden gegenüber den Leiterstücken der Schaltanlage fixiert ist und gleichzeitig die Prüfelektroden mit einer definierten Kontaktkraft auf den Leiterstücken aufliegen. Ein anderer Adapter hält die Prüfelektroden in dem geforderten Abstand, wenn mit der Schaltanlage normaler Betrieb durchgeführt wird. Die bekannte Prüfeinrichtung gestattet zwar die Durchführung von Spannungsprüfungen ohne Eingriffe in das Innere der Schaltanlage vorzunehmen, insbesondere ohne das Isoliergas ablassen zu müssen. Sie erfordert aber einen aufwendigen Aufbau zusätzlicher Bauteile. Sie läßt außerdem nur die gleichzeitige Prüfung der Kabel oder Innenleiter aller drei Phasen zu, was eine konkrete Fehlerortung ausschließt. Eine weitere Einschränkung liegt darin, daß dabei nicht die Spannungsfestigkeit zwischen den Phasen geprüft werden kann. Mit keiner der erwähnten Prüfeinrichtungen läßt sich darüber hinaus der Zustand des Isoliergases überwachen, wenn gleichzeitig mit der Schaltanlage bei Betriebsspannung normaler Betrieb durchgeführt werden soll.

Zur Überwachung der Dichte des Isoliergases sind andere Einrichtungen bereits bekannt geworden die während des normalen Betriebs der Schaltanlage einsetzbar sind. Nach dem Gebrauchsmuster DE-GM 78 26 451 wird dazu beispielsweise eine normale Zündkerze angewendet, an deren Anschlußbolzen eine geeignete Prüfspannung angelegt werden kann. Mit dieser Einrichtung läßt sich jedoch weder eine Prüfung des Isoliervermögens der Schaltanlage noch eine Kabelprüfung durchführen.

Die Aufgabe der Erfindung ist in einer Weiterentwicklung der Prüfeinrichtung der bekannten Art mit dem Ziel zu sehen, neben der Prüfung des Isoliervermögens jeder einzelnen Phase der Schaltanlage oder jedes einzelnen angeschlossenen Kabels die Spannungsfestigkeit des Isoliergases auch dann überwachen zu können, wenn die Schaltanlage in Betrieb ist.

Die Aufgabe wird durch die kennzeichnenden Merkmale des ersten Patentanspruchs gelöst. Die erfindungsgemäße Ausbildung der Prüfelektrode gestattet neben der Anlegung der Prüfspannung an jede einzelnde Phase der internen Leitungssführung auch die elektrische Überwachung des Isoliergases bei in Betrieb befindlicher Schaltanlage. Eine zusätzliche Erdungsmöglichkeit der Prüfelektrode ermöglicht nach der Beendigung einer jeden Spannungsprüfung eine gefahrlose Berührung der außerhalb der Kapselung befindlichen Teile der Prüfeinrichtung durch das Bedienungspersonal. Außerdem sind zur Sicherheit des Bedienungspersonals Maßnahmen vorgesehen, die eine Berührung des Prüfleiters verhindern oder wenigstens erschweren, wenn letzterer infolge einer Fehlbedienung mit einem an Betriebsspannung befindlichen Phasenleiter kontaktiert. Vorteilhafte Weiterbildungen der Prüfeinrichtung sind in den Unteransprüchen enthalten. Zum besseren Verständnis wird auf die Zeichnungen verwiesen. Es stellen dar:

Fig. 1 Schnitt durch eine gekapselte Schaltanlage mit der Prüfeinrichtung

Fig. 2 Schnitt XY zu Figur 1

Fig. 3 Einzeldarstellung der Prüfeinrichtung

Fig. 4 Kulisse der Rasteinrichtung in abgewickelter Darstellung

Fig. 5 Ansicht in Richtung Z auf die Prüfeinrichtung

Fig. 6 Schnitt ST zu Figur 7

Fig. 7 Axialschnitt einer Prüfeinrichtung mit Kappe zur Absicherung.

Fig. 8 Ansicht einer elektromagnetischen Verriegelung nach Figur 9.

Fig. 9 Schematische Darstellung der Wirkungsweise einer elektromagnetischen Verriegelung zur gesicherten Bedienung der Prüfeinrichtung.

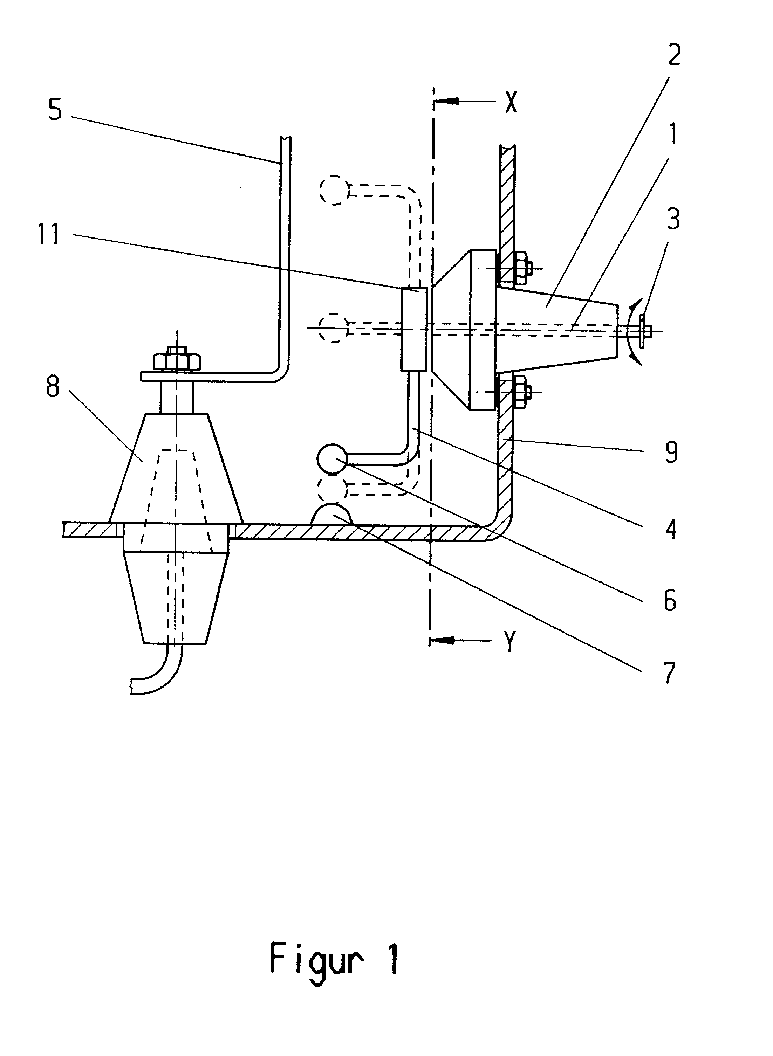

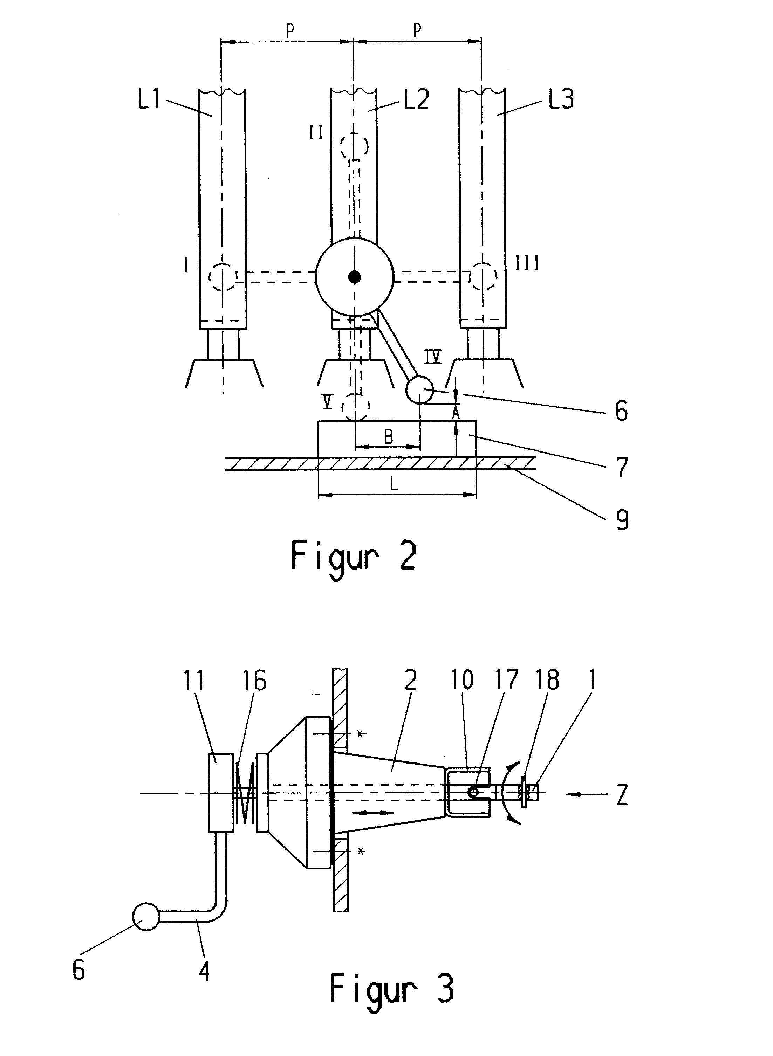

In die Kapselung 9 einer mit Druckgas isolierten Schaltanlage ist die für Spannungsprüfungen ausgelegte Durchführung 2 fest eingebaut. In der Durchführung 2 ist der Prüfleiter 1 drehbar und gasdicht gelagert. Nach Figur 1 ist erkennbar, daß an dem Prüfleiterkopf 11 eine gekröpfte Prüfelektrode 4 mit einem vorzugsweise kugelförmigem Kontaktstück 6 angebracht ist. Nach Figur 2 kann diese Prüfelektrode durch Drehung des Prüfleiters nacheinander mit den Leiterstücken 5 der Phasen $L_1$, $L_2$, und $L_3$ in Verbindung gebracht werden. Zusätzlich ist als Stellung IV eine Prüfstellung vorgesehen, in der das Kontaktstück 6 im Abstand A gegenüber einer geerdeten Elektrode 7 steht. Dieser Abstand A ist so ausgewählt, daß bei betriebsmäßiger Gasdichte eine festgelegte Prüfspannung zwischen beiden Elektroden 6 und 7 gehalten wird. Außerdem läßt sich der Prüfleiter noch in eine Stellung V schwanken, in der das Kontaktstück 6 mit der an Erdpotential liegenden Elektrode 7 in Berührung kommt. Bei dem in den Figuren 1 und 2 abgebildeten Beispiel handelt es sich bei den Leiterstücken 5 um den Kabelabgang, der an einem in der Kapselung 9 in bekannter Weise eingebauten Kabelstecker 8 oder einem Kabelendverschluß angeschlossen ist. Das Kontaktstück 6 kann wie in der zum Oberbegriff genannten Druckschrift EP 168 320 A2 gegenüber der Prüfelektrode 4 gefedert sein, so daß in den Prüfstellungen I bis III die erforderliche Kontaktkraft hergestellt wird. Die Erzeugung einer Berührungskraft zwischen dem Kontaktstück 6 und den Leiterstücken 5 läßt sich auch dadurch erreichen, daß der radiale Arm der Prüfelektrode 4 selbst als federndes Bauteil, z. B. durch eine Blattfederanordnung, ausgeführt ist.

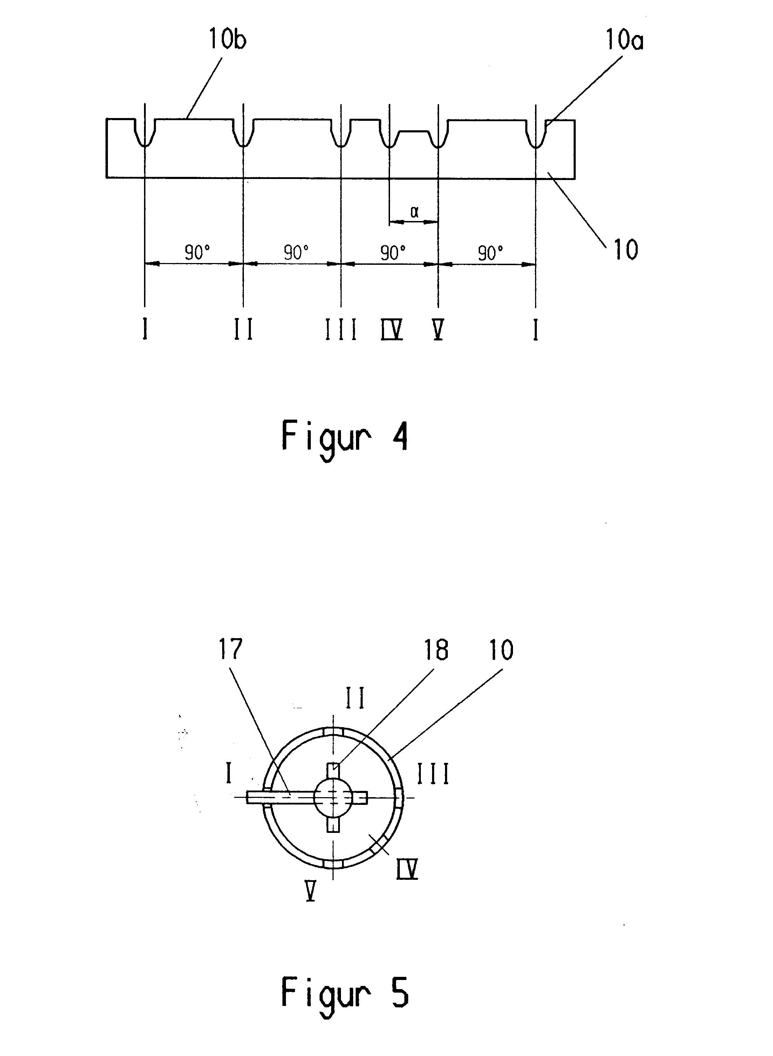

Erfindungsgemäß wird in den Figuren 3 bis 5 eine verbesserte Rasteinrichtung vorgeschlagen, die eine einfachere und sicherheitstechnisch verbesserte Handhabung der erfindungsgemäßen Prüfeinrichtung ermöglicht. Dabei wird zwischen dem Kopf 11 des Prüfleiters und dem Abschluß der Durchführung 2 eine Druckfeder 16 vorgesehen, die unter einer Vorspannung steht, wenn der quer durch den Prüfleiter 1 gesteckte Raststift 17 in einer der Nuten 10a der Kulisse 10 einrastet. Gemäß Figur 4 ist jeweils einer der Einstellungen I bis V eine Nut 10a zugeordnet.

Damit sich für den Platzbedarf der erfindungsgemäßen Prüfeinrichtung optimale Platzverhältnisse ergeben, ist es vorteilhaft den Radius der Prüfelektrode 4 wenigstens annähernd gleich dem Polmittenabstand P zwischen den Phasenleitern $L_1$, $L_2$ und $L_3$ zu wählen. Daraus ergeben sich zwischen den einzelnen Einstellungen I, II, III und V zumindest annähernd Drehwinkel von 90°. Innerhalb des Sektors zwischen den Einstellungen III und V liegt an geeigneter Stelle, die durch den Abstand A gegeben ist, die Prüfstellung IV.

Am nach außen gekehrten Ende des Prüfleiters 1 ist außerdem ein Mitnehmer 18 in Form eines quer zur Leiterachse durchgesteckten Stiftes vorgesehen, an dem eine der bekannten Handhaben z.

B. eine Handkurbel angesteckt werden kann, um eine Umschaltung zwischen den einzelnen Einstellungen zu ermöglichen. Bei einer solchen Umschaltung wird mittels der Handhabe der Prüfleiter 1 und mit ihm die Prüfelektrode 4 zunächst in axialer Richtung gegen die Kraft der Feder 16 so lange bewegt bis der Raststift 17 die Nut 10a verlassen hat. Dann erfolgt mit derselben Handhabe eine Drehung des Prüfleiters 1 bis die gewünschte nächste Prüfeinstellung erreicht ist. Die Druckfeder 16 veranlaßt nun eine Rückbewegung des Prüfleiters in axialer Richtung bis das Kontaktstück 6 auf dem nun zu prüfenden Leiterstück 5 kontaktgebend aufliegt. Ähnlich erfolgt in der Prüfstellung IV eine Rückführung bis der Raststift 17 auf dem Grund der Nut 10a angekommen ist und in der Erdungsstellung V bis das Kontaktstück 6 die geerdete Elektrode 7 erreicht hat. Da im normalen Betriebszustand der Schaltanlage die Prüfelektrode 4 an Erdpotential liegt, kann der Prüfleiter 1 gefahrlos von außerhalb der Schaltanlage berührt werden. Auch in der Prüfeinstellung IV liegt an dem Prüfleiter 1 keine betriebsmäßige Spannung an. Anders ist das bei den Prüfeinstellungen I bis III. Um der Sicherheit des Bedienungspersonals Rechnung zu tragen ist nach einem weiteren Merkmal der Erfindung vorgesehen den Rand 10b der Kulisse 10 zwischen den Einstellungen IV und V deutlich niedriger vorzusehen als zwischen allen anderen Einstellungen. Damit soll erreicht werden, daß mittels der größeren Verstellkraft der Feder 16 in den letztgenannten Fällen das Badienungspersonal auf eine gegebenenfalls Gefahr bringende Umstellung aufmerksam gemacht wird. Eine solche Umstellung ist bekanntlich nur zulässig, wenn die zu prüfenden Leiterstücke 5 vorher vom restlichen Netz abgeschaltet worden sind, ihre Spannungsfreiheit überprüft worden ist und vor dar beabsichtigten Spannungsprüfung eine Erdung stattgefunden hat, die nach Anlegen der Prüfelektrode wieder aufzuheben ist.

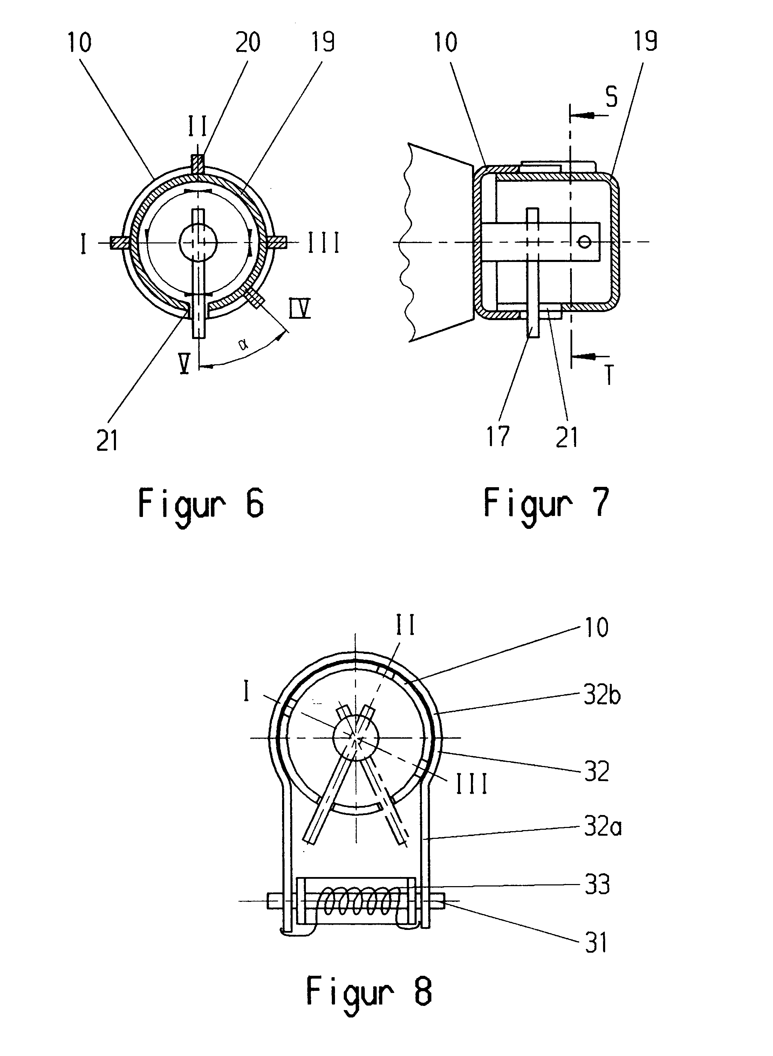

Die Sicherheit des Bedienungspersonals läßt sich nach einem weiteren Merkmal der Erfindung auch durch eine auf die Kulisse 10 aufsteckbare Kappe 19 gewährleisten, die mit in die Nuten 10a einführbaren Nasen 20 versehen ist. Erfindungsgemäß läßt sich die Kappe 19 nur in der Einstellung V, in der der Prüfleiter 1 geerdet ist, aufschieben. Dies wird dadurch erreicht, daß die Kappe 19 eine Nut 21 aufweist, die über den Raststift 17 greift, während die Nasen 20 so angeordnet sind, daß sie gleichzeitig in die Nuten 10a der Einstellungen I bis IV eingreifen. Eine weitere Vereinfachung besteht darin, daß der Winkel zwischen der Einstellung IV und V kleiner oder größer als 45° ist, wodurch die Kappe 19 lediglich eine Nase benötigt die in besagtem Winkel zur Nut 21 anzuordnen ist. Die eben beschriebene Ausführung ist in den Figuren 6 und 7 dargestellt, aus denen auch ersehen werden kann, daß bei dieser Sicherungsmaßnahme der Rand 10b der Kulisse 10 an allen Stellen gleich hoch sein kann, da als maßgebliche Sicherheitsmaßnahme das Aufstecken der Kappe 19 auf die Kulisse 10 vorgesehen ist. Dies kann jedoch wie eben beschrieben nur erfolgen, wenn die Prüfelektrode 4 mit der geerdeten Elektrode 7 Verbindung hat und dabei der Raststift 17 in der dafür vorgesehenen Nut 10a steht.

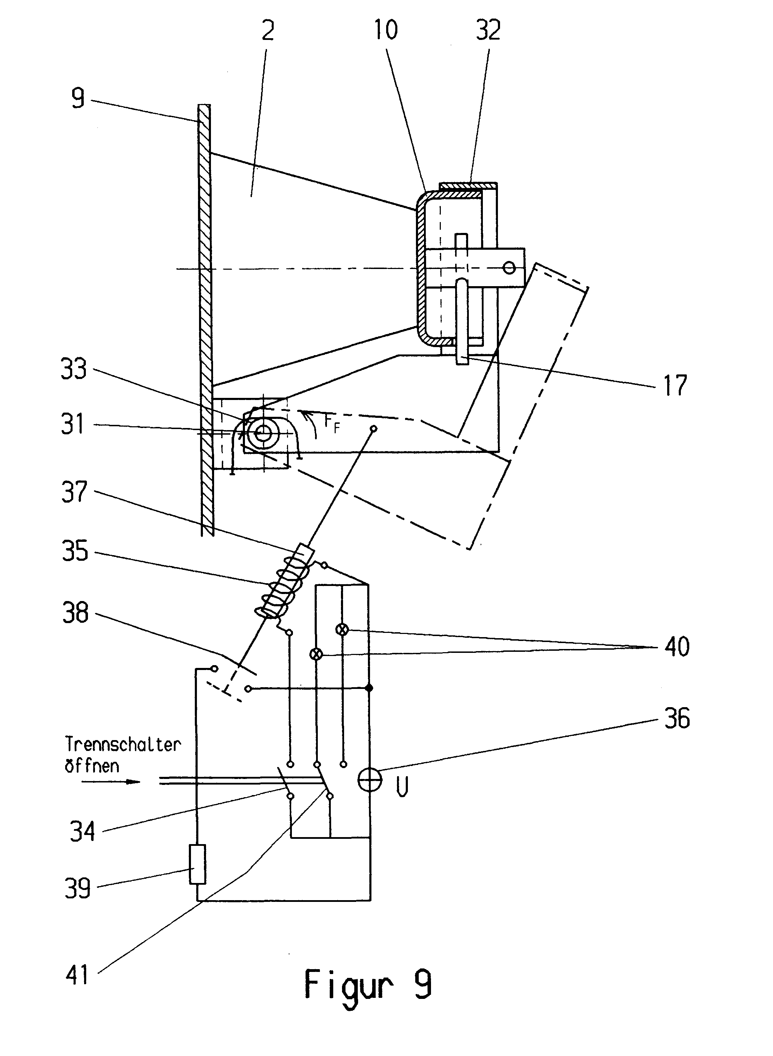

Die Verhinderung von lebensbedrohlichen Schalthandlungen kann bei der erfindungsgemäßen Prüfeinrichtung in vorteilhafter Weise auch durch eine zusätzliche elektromagnetische Verriegelung erreicht werden, was vor allem bei fernbedienten Schaltanlagen von Bedeutung ist. In den Figuren 8 und 9 ist zu erkennen, daß ein um einen Drehpunkt 31 drehbarer Sperriegel 32 bei normalem Betrieb, d. h. bei anliegender Betriebsspannung an den drei Phasen L1, L2 und L3 die uneingeschränkte Betätigung der Prüfeinrichtung nur zwischen den Einstellungen IV und V zuläßt, während ein Weiterdrehen in die Einstellungen I, II oder III durch die Arme 32a des Sperriegels verhindert ist. Eine Feder 33 hält dabei den Sperriegel 32 in der eben beschriebenen Sperrstellung. Soll nun eine Spannungsprüfung an einem der Leiterstücke 5 durchgeführt werden, so schließt sich beim Öffnen des zugehörigen, nicht dargestellten Trennschalters im Steuerkreis der Kontakt 34 und verbindet dadurch den Sperrmagneten 35 mit einer Spannungsquelle 36. Der Anker 37 des Sperrmagneten zieht nun den Sperriegel 32 unter Überwindung der Kraft der Feder 33 in die Strich-Punktlage, in der der Raststift 17 der Prüfeinrichtung auch in die Einstellungen I, II und III gedreht werden kann.

Wenn in einer dieser Prüfeinstellungen I, II oder III aus Versehen die Schließung des zugeordneten Trennschalters durchgeführt wird, öffnet der Steuerkontakt 34 und die Feder 33 dreht nun den Sperriegel 32 in Richtung der Sperrlage desselben. Der ringförmige Teil 32b des Sperriegels 32 stößt nun gegen den Raststift 17 und kann dadurch die Sperrstellung nicht erreichen. In dieser eben beschriebenen Zwischenstellung verbindet der nach Figur 9 beispielsweise mit dem Anker 37 gekoppelte Wischkontakt 38 ein Alarmgerät 39 mit der Spannungsquelle. Auf diese Weise kann durch ein akustisches und/oder ein optisches Signal auf die für das Bedienungspersonal gefährliche Situation aufmerksam gemacht werden. Diese wird nach einer erneuten Öffnung des Trennschalters behoben, da dadurch die Spule des Sperrmagneten 35 erneut an Spannung gelegt und der Sperriegel wieder vollkommen geöffnet wird. Der Wischkontakt 38 öffnet dabei den Stromkreis des Alarmgeräts 39.

Die Funktion des Sperriegels 32 erfordert, daß er gegenüber dem auf Erdpotential befindlichen Drehpunkt isoliert ausgeführt ist, da er während der Prüfvorgänge in unmittelbarer Nähe von an Hochspannung liegenden Teilen ist.

Statt der beschriebenen Ausführung der Verriegelung mit dem Wischkontakt 38 kann auch über einen vom Raststift 17 in den Einstellungen I, II, III betätigten Steuerkontakt zumindest eine fernbetätigte Einschaltung des Trennschalters verhindert werden. Zur Vermeidung von fehlerhaften Bedienungen der Prüfeinrichtung können auch über einen weiteren Steuerkontakt 41 geschaltete Signallampen 40 in der unmittelbaren Nähe der Durchführung 2 angeordnete Signallampen oder ähnliches zur Anzeige der Stellung des zugehörigen Trennschalters eingesetzt werden.

**Patentansprüche**

1. Prüfeinrichtung für das Isoliervermögen von gekapselten, mit einem Isoliergas gefüllten Schaltanlagen,
   - mit einer Durchführung (2) und einem in ihr gasdicht gelagerten, bewegbaren Prüfleiter (1), dessen äußeres Ende (3) als Anschlußstelle für eine Prüfspannungsquelle und als Adapter für eine Handhabe zur Verstellung des Prüfleiters (1) ausgebildet ist,
   - mit wenigstens einer winkelig zum Prüfleiter (1) angeordneten und mit letzterem leitend verbundenen Prüfelektrode (4), die mittels einem Kontaktstück (6) mit vorzugsweise kugelförmiger Oberfläche in einer Prüfeinstellung mit einem Leiterstück (5) innerhalb der Schaltanlage und nach einer Drehung des Prüfleiters (1) mit einem anderen Leiterstück (5) in Berührung bringbar ist und die in wenigstens einer weiteren Einstellung gegenüber allen zur aktiven Leitungsführung gehörenden Leiterstücken (5) das volle Isoliervermögen einhält, sowie mit einer Rasteinrichtung, die aus einem mit dem Prüfleiter (1) verbundenen Raststift (17) und einer den Prüfleiter (1) konzentrisch umgebenden Rastscheibe mit Nuten (10a) besteht, in denen der Raststift (17) in den Prüfeinstellungen nach einer axialen Bewegung des Prüfleiters (1) unter gleichzeitiger Berührung zwischen dem Leiterstück (5) und dem Kontaktstück (6) fixiert ist, dadurch gekennzeichnet, daß das Kontaktstück (6) in einer das volle Isoliervermögen zu den Leiterstücken (5) einhaltenden Lage einer an Erdpotential liegenden Elektrode (7) in der Entfernung (A) gegenübersteht, in der mittels einer Prüfspannung die Dichte des Isoliergases überwachbar und in einer zusätzlichen Einstellung mit dem Erdpotential in Berührung bringbar ist.

2. Prüfeinrichtung für das Isoliervermögen von metallgekapselten, mit einem Isoliergas gefüllten Schaltanlagen nach Patentanspruch 1, dadurch gekennzeichnet, daß das Kontaktstück (6) durch Drehung des Prüfleiters (1) nacheinander in drei Prüfeinstellungen (I,II,III) jeweils mit dem Leiterstück (5) einer der drei Phasen (L1, L2, L3) in Berührung bringbar ist und in einer vierten Prüfeinstellung (IV) der geerdeten Elektrode (7) in der Entfernung (A) gegenübersteht sowie in der fünften Einstellung (V) mit letzterer in galvanische Berührung kommt.

3. Prüfeinrichtung für das Isoliervermögen von metallgekapselten, mit einem Isoliergas gefüllten Schaltanlagen nach Patentanspruch 1 oder 2, dadurch gekennzeichnet, daß eine vorzugsweise zwischen dem Prüfleiterkopf (11) und der Stirnseite der Durchführung (2) angeordnete Feder (16) in den vorgegebenen Einstellungen (I bis V) den Prüfleiter (1) in der Rasteinrichtung festlegt und dabei das Kontaktstück (6) in den Prüfeinstellungen (I bis III) mit einem der Leiterstücke (5) und in der Einstellung (V) mit der geerdeten Elektrode (7) unter einer Vorspannkraft in Berührung bringt, während sie das Kontaktstück (6) in der Prüfeinstellung (IV) im Abstand (A) zur geerdeten Elektrode (7) fixiert und daß während der Drehungen es Prüfleiters (1) zwischen den einzelnen Einstellungen die Feder (16) unter einer erhöhten Kraft steht.

4. Prüfeinrichtung für das Isoliervermögen von metallgekapselten, mit einem Isoliergas gefüllten Schaltanlagen nach Patentanspruch 3, dadurch gekennzeichnet, daß die Ausbildung des oberen Randes (10b) einer zur Rasteinrichtung gehörenden Kulisse (10) während der Drehung zwischen den Einstellungen IV und V eine geringere axiale Verstellung des Prüfleiters (1) gegen die Kraft der Feder (16) erfordert, als während der Drehung zwischen jeweils zwei anderen Einstellungen.

5. Prüfeinrichtung für das Isoliervermögen von metallgekapselten , mit einem isoliergasgefüllten Schaltanlagen nach jedem der vorangehenden Patentansprüche, dadurch gekennzeichnet, daß die geerdete Elektrode (7) gleichzeitig auch als Berührungsstelle des Kontaktstücks (6) ausgebildet ist.

6. Prüfeinrichtung für das Isoliervermögen von metallgekapselten, mit einem Isoliergas gefüllten Schaltanlagen nach Patentanspruch 5, dadurch gekennzeichnet, daß als geerdete Elektrode (7) ein Halbzylinder vorgesehen ist, dessen Länge (L) größer als der Abstand (B) zwischen den Stellungen IV und V des Kontaktstücks (6) ist.

7. Prüfeinrichtung für das Isoliervermögen von metallgekapselten, mit einem Isoliergas gefüllten Schaltanlagen nach Patentanspruch 1 oder einem der nachfolgenden, dadurch gekennzeichnet, daß eine Kappe (19) vorgesehen ist, die nur bei geerdeter Prüfelektrode (4) mit der Rasteinrichtung verbindbar ist.

8. Prüfeinrichtung für das Isoliervermögen von metallgekapselten, mit einem Isoliergas gefüllten Schaltanlagen nach Patentanspruch 7, dadurch gekennzeichnet, daß die Kappe (19) eine mit dem Raststift (17) korrespondierende Nut (21) und zumindest eine Nase (20) aufweist, die mit der zur Stellung IV gehörenden Nut (10a) der Kulisse (10) zusammenwirkt.

9. Prüfeinrichtung für das Isoliervermögen von metallgekapselten, mit einem Isoliergas gefüllten Schaltanlagen nach jedem der vorangegangen Patentansprüche, dadurch gekennzeichnet, daß eine von der Stellung des zu den Leiterstücken (5) der drei Phasen (L1, L2, L3) zugeordneten Trenn- oder Lasttrennschalters abhängige Sperrvorrichtung eine Umstellung der Prüfelektrode (4) auf eine der Einstellungen I, II oder III verhindert, solange wenigstens eine der drei Phasen (L1, L2, L3) an Spannung liegt.

10. Prüfeinrichtung für das Isoliervermögen von metallgekapselten, mit einem Isoliergas gefüllten Schaltanlagen nach Patentanspruch 9, dadurch gekennzeichnet, daß die Sperrvorrichtung aus einem um einen Drehpunkt (31) drehbaren Sperriegel (32) besteht, der bei eingeschaltetem Trennschalter eine Verstellung des Raststiftes (17) verhindert und bei geöffnetem Trennschalter diese freigibt.

11. Prüfeinrichtung für das Isoliervermögen von metallgekapselten, mit einem Isoliergas gefüllten Schaltanlagen nach Patentanspruch 10, dadurch gekennzeichnet, daß der Sperriegel (32) mittels eines von einem Steuerkontakt (34) des Trennschalters in dessen geöffneter Stellung erregten Sperrmagneten (35) gegen die Kraft einer Feder (33) bewegbar ist.

12. Prüfeinrichtung für das Isoliervermögen von metallgekapselten, mit einem Isoliergas gefüllten Schaltanlagen nach einem der vorangegangen Patentansprüche, dadurch gekennzeichnet, daß in jeder der Einstellungen I, II oder III der Prüfeinrichtung eine Einschaltung des zugeordneten Trenn- oder Lasttrennschalters zur Auslösung eines Alarmsignals führt.

13. Prüfeinrichtung für das Isoliervermögen von metallgekapselten, mit einem Isoliergas gefüllten Schaltanlagen nach Patentanspruch 12, dadurch gekennzeichnet, daß bei an dem Raststift (17) unter der Wirkung der Feder (33) anliegenden Sperriegel (32) über einen mit letzterem verbunden Steuerkontakt (38) wenigstens eine Alarmeinrichtung (39), beispielsweise eine Hupe oder Warnleuchte aktiviert ist.

14. Prüfeinrichtung für das Isoliervermögen von metallgekapselten, mit einem Isoliergas gefüllten Schaltanlagen nach jedem der vorangegangen Patentansprüche, dadurch gekennzeichnet, daß über vom Raststift 17 in den Einstellungen I, II oder III betätigte Steuerkontakte zumindestens eine fernbetätigte Einschaltung des Trennschalters verhindert ist.

15. Prüfeinrichtung für das Isoliervermögen von metallgekapselten, mit einem Isoliergas gefüllten Schaltanlagen nach einem der Patentansprüche 9 bis 13, dadurch gekennzeichnet, daß der Sperriegel (32) aus Isolierstoff besteht.

Figur 1

Figur 2

Figur 3

10b                                                                10a

90°        90°        90°        90°

α

10

I          II        III  IV    V          I

# Figur 4

17                    18    10

II

I                          III

IV

V

# Figur 5

Figur 6

Figur 7

Figur 8

9

2      10      32

33

31      $F_F$

17

37

35

38

40

36

Trennschalter
öffnen

U

34

39

41

# Figur 9

| | | Europäisches Patentamt | EUROPÄISCHER RECHERCHENBERICHT | | Nummer der Anmeldung |
|---|---|---|---|---|---|

**Nummer der Anmeldung**

**EP 91 11 1591**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 168 320  (MERLIN GERIN)<br>* Zusammenfassung; Seite 4, Zeile 18 - Seite 5, Zeile 15; Seite 6, Zeile 5 - Seite 7, Zeile 2; Seite 14, Zeile 12 - Seite 15, Zeile 25; Seite 16, Zeilen 14-23; Seite 17, Zeile 18 - Seite 18, Zeile 2; Seite 18, Zeilen 14-19; Seite 19, Zeilen 13-17; Seite 21, Zeilen 19-23; Abbildungen 2,5-8 * | 1 | H 02 B 13/035<br>H 02 B 13/055 |
| D,A | | 2-7 | |
| | – – – | | |
| D,Y | DE-U-7 826 451  (F. DRIESCHER)<br>* Seite 1, Zeilen 1-3; Seite 2, Zeilen 1-7; Seite 3, Zeilen 4-15; Abbildung 1 * | 1 | |
| D,A | | 2 | |
| | – – – | | |
| A | GB-A-329 020  (REYROLLE)<br>* Seite 5, Zeilen 70-83 * | 1,2,9,10 | |
| | – – – | | |
| A | JP-A-1 291 609  (HITACHI)<br>* Zusammenfassung; Abbildungen 2,3<br>* & PATENT ABSTRACTS OF JAPAN, Band 14, Nr. 079, 14. Februar 1990 | 1,2 | |
| | – – – | | **RECHERCHIERTE SACHGEBIETE (Int. Cl.5)** |
| D,A | DE-A-2 628 453  (SIEMENS)<br>* Seite 3, Zeilen 1-5; Seite 4, Zeilen 4-18; Seite 4, Zeile 29 - Seite 5, Zeile 21; Seite 7, Zeile 36 - Seite 8, Zeile 10; Abbildungen 1-3,7 * | 1,2 | H 02 B |
| | – – – | | |
| A | DE-U-1 819 889  (CONTINENTAL)<br>* Seite 2, Zeile 19 - Seite 3, Zeile 13; Abbildungen 1-3 * | 8-11 | |
| | – – – – – | | |

Der vorliegende Recherchenbericht wurde für alle Patentansprüche erstellt

| Recherchenort | Abschlußdatum der Recherche | Prüfer |
|---|---|---|
| Den Haag | 15 Oktober 91 | LUND M. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
   nach dem Anmeldedatum veröffentlicht worden ist
D : in der Anmeldung angeführtes Dokument
L : aus anderen Gründen angeführtes Dokument

-------------------------------------------------------------

& : Mitglied der gleichen Patentfamilie,
   übereinstimmendes Dokument